# EUROPEAN PATENT SPECIFICATION

(11) **EP 0 948 978 B1**
(45) Date of publication and mention of the grant of the patent: **04.10.2006**
(21) Application number: 99104074.2
(22) Date of filing: 18.03.1999
(51) Int. Cl.: A63F 13/00, G06T 15/50

(54) **Image creating apparatus, image creating method, and computer-readable recording medium containing image creating program**
Bilderzeugungsvorrichtung, Bilderzeugungsverfahren und computerlesbares Aufzeichnungsmedium für Bilderzeugungsprogramm
Appareil de génération d'image, méthode de génération d'image et support d'enregistrement pour programme de génération d'image

(30) Priority: 19.03.1998 JP 7106398
(43) Date of publication of application: 13.10.1999
(73) Proprietor: Konami Co., Ltd., Kobe-shi, Hyogo-ken (JP)
(72) Inventor: Higashiyama, Masahiko, Kobe-shi, Hyogo-ken (JP)
(74) Representative: Müller-Boré & Partner Patentanwälte

(56) References cited:
- WO-A-96/25211
- WO-A-98/48381
- US-A- 4 600 200
- US-A- 5 616 031
- BOUKNIGHT W.J.: 'A Procedure for Generation of Three-dimensional Half-toned Computer Graphics Presentations' COMMUNICATIONS OF THE ACM vol. 13, no. 9, September 1970, pages 527 - 536
- ATHERTON P. ET AL: 'Polygon Shadow Generation' PROC. INT. CONF. ON COMPUTER GRAPHICS AND INTERACTIVE TECHNIQUES vol. 12, August 1978, pages 275 - 281

## Description

The present invention relates to image creating apparatuses applied to video game machines using, for example, a cassette recording medium or the like in which an optical disk, a magnetic disk, or a semiconductor memory containing program data, is used, and to image creating methods therefor and recording media containing image recording programs.

Many game systems have been proposed, such as a system comprised of a home-use game console and a television monitor, a commercial-use game machine, and a system comprised of a personal computer or work station, a display, and a sound output device.

These game systems each include a player-operated controller, a recording medium containing game-program data, a central processing unit (CPU) for performing control for the generation of sound and images based on the game-program data, a processor for generating images, a processor for generating sound, a monitor for displaying images, and a speaker for outputting the generated sound. In many cases, the types of recording medium include a compact-disk read-only memory (CD-ROM), a semiconductor memory, and a cassette having a built-in semiconductor memory.

In these game systems, in general, three-dimensional models as objects displayed on a screen are composed of polygons as a plurality of two-dimensional virtual triangular or square figures, and the polygons, on which textures such as two-dimensional image data are pasted, are displayed on the monitor. Normally, the textures to be pasted on the polygons are separately set and stored in a memory beforehand.

In the case where these game systems use a two-dimensional character and background models behind the character, shading makes it very difficult to determine whether the character is on or in front of the background models.

In order that the character may be clearly displayed so as to be disposed in front of the background models, it is demanded that a shadow of the character, formed on the background models, be displayed.

W.J. Bouknight: "A Procedure for Generation of Three-dimensional Half-toned Computer Graphics Presentation", Communications of the ACM, September 1970, Vol. 13, No. 9, pages 527 - 536 discloses an algorithm for producing computer generated half-toned presentations of three-dimensional polygonal surface structures.

P. Atherton et al.: "Polygon Shadow Generation", Proceedings International Conference on Computer Graphics and Interactive Techniques, August 1978, Vol. 12, pages 275-281 discloses a method for generating shadows using a polygonal coordinate data base.

It is the object of the invention to provide an image creating apparatus for displaying a character shadow without increasing an operation load, an image creating method therefor, and a computer-readable recording medium containing an image creating program.

This object is fulfilled by an image creating apparatus for displaying a character having the features disclosed in claim 1, an image creating method having the features disclosed in claim 4, and a computer-readable recording medium having the features disclosed in claim 5. Preferred embodiments are defined in the dependent subclaims.

According to the present invention there is provided an image creating apparatus for displaying a shadow of a two-dimensional character image on background models, an image creating method therefor, and a computer-readable recording medium containing an image creating program.

According to the present invention, a shadow of a game character on models can be displayed, whereby the character can be clearly displayed so as to be in front of the models.

According to the present invention, a shadow of a game character can be displayed on three-dimensional models, whereby the character shadow can be displayed with enhanced reality.

According to the present invention, a shadow of a game character caused by a virtual light source can be displayed on a model area, whereby the character shadow can be displayed with reality, and the coordinates of a common polygon, whereby the character shadow can be displayed with reality, and the coordinates of a common polygon, which is formed by an area in which a projected polygon is superimposed on a character polygon, are two-dimensionally found, whereby an increase in an operation load can be prevented.

Fig. 1 is a block diagram showing a game system according to an embodiment of the present invention.

Fig. 2 is a drawing showing a video-game screen.

Fig. 3 is a drawing showing a video-game screen.

Fig. 4 is a block diagram showing the functional blocks of a central processing unit, and parts of the game system shown in Fig. 1.

Fig. 5 is a drawing illustrating coordinate transformation.

Fig. 6 is a drawing illustrating determination of superimposition of polygons.

Fig. 7 is a drawing illustrating superimposition of a character polygon and a projected polygon.

Fig. 8 is a drawing illustrating superimposition of a character polygon and a projected polygon.

Fig. 9 is a flowchart showing an example of a process for displaying a shadow.

Fig. 10 is a flowchart showing an example of a process for displaying a shadow.

Fig. 11 is a flowchart showing an example of -a process for displaying a shadow.

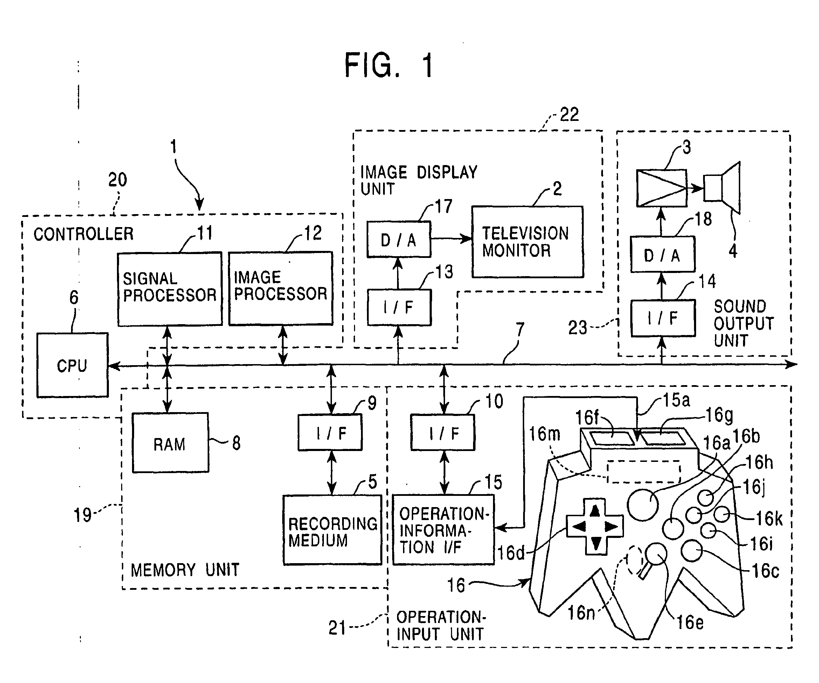

Fig. 1 shows a game system 1 according to an embodiment of the present invention.

The game system 1 includes a main unit, a television (TV) monitor 2 for outputting game images, an amplification circuit 3 and a speaker 4 for outputting game sound, and a recording medium 5 containing game data comprised of images, sound, and program data. The recording medium 5 is, for example, a so-called "read only memory (ROM) cassette" in which a ROM containing the game data and the program data of an operating system is accommodated in a plastic case, an optical disk, or a flexible disk.

In the main unit, a bus 7 comprised of an address bus, a data bus, and a control bus (not shown), is connected to a CPU 6. A random access memory (RAM) 8, interface (I/F) circuits 9 and 10, a signal processing processor 11, an image processor 12, and I/F circuits 13 and 14, are connected to the bus 7. A controller 16 is connected to the I/F circuit 10 via an operation-information I/F circuit 15. A digital-to-analog (D/A) converter 17 is connected to the I/F circuit 13, and a D/A converter 18 is connected to the I/F circuit 14.

The RAM 8, the I/F circuit 9, and the recording medium 5 constitute a memory unit 19. The CPU 6, the signal processor 11, and the image processor 12 constitute a controller 20 for controlling the progress of the game. The I/F circuit 10, the operation-information I/F circuit 15, and the controller 16 constitute an operation input unit 21. The TV monitor 2, the I/F circuit 13, and the D/A converter 17 constitute an image display unit 22. The amplification circuit 3, the speaker 4, the I/F circuit 14, and the D/A converter 18 constitute a sound output unit 23.

The signal processor 11 mainly performs computation in a three-dimensional space, computation for transformation from a position in a three-dimensional space into a position in a pseudo-three-dimensional space, illumination computation, and the generation and processing of sound data.

The image processor 12 performs, based on a result of computation by the signal processor 11, the writing of image data to be rendered in the display area of the RAM 8, for example, the writing of texture data to an area of the RAM 8 that is specified by polygons. The writing of the texture data is described below.

The controller 16 has a start button 16a, an A-button 16b, a B-button 16c, a cross key 16d, a control stick 16e, a left trigger button 16f, a right trigger button 16g, a C1-button 16h, a C2-button 16i, a C3-button 16j, a C4-button 16k, a connector 16m, and a depth trigger button 16n.

A memory card or the like for temporarily storing the progress of the game can be set in the connector 16m.

The form of the game system 1 differs depending on its purpose.

In other words, in the case where the game system 1 is intended for home use, the TV monitor 2, the amplification circuit 3, and the speaker 4 are provided separately from the main unit. In the case where the game system 1 is intended for commercial use, all the components shown in Fig. 1 are integrated in a casing.

In the case where the game system 1 has a personal computer or workstation its core, the TV monitor 2 corresponds to a display for the computer or workstation, the image processor 12 corresponds to part of the game program data recorded on the recording medium 5, or the hardware of an add-in board set in an add-in slot of the computer or workstation, and the I/F circuits 9, 10, 13, and 14, the D/A converters 17 and 18, and the operation-information I/F circuit 15, correspond to the hardware of an add-in board set in an add-in slot of the computer or workstation. The RAM 8 corresponds to the main memory of the computer or workstation, or to each area of an extension memory.

In the first embodiment, the case where the game system 1 is intended for home use is described.

The operation of the game system 1 is briefly described.

When the game system 1 is supplied with power by turning on a main-power switch (not shown), the CPU 6 reads, based on an operating system recorded on the recording medium 5, images, sound, and game-program data from the recording medium 5. A portion or the entirety of the images, sound, and game-program data read by the CPU 6 is stored in the RAM 8.

Subsequently, the CPU 6 proceeds with the game, based on the game-program data stored in the RAM 8, and on instructions input through the controller 16 by a game player. In other words, the CPU 6 generates, based on instructions-from the--game player via the controller 16, commands as tasks for rendering and sound output.

Based on the generated commands, the signal processor 11 performs computation of the position of a game character in a three-dimensional space (similarly in a two-dimensional space), illumination computation, and the generation and processing of sound data.

Next, based on a result of the computation, the image processor 12 performs the writing of image data to be rendered in the display area of the RAM 8. The image data written in the RAM 8 are supplied to the D/A converter 17 via the I/F circuit 13. The supplied image data are converted into analog video signals by the D/A converter 17. The video signals are supplied to the TV monitor 2, and are displayed as an image on the screen of the TV monitor 2.

The sound data output from the signal processor 11 are supplied to the D/A converter 18 via the I/F circuit 14. The supplied sound data are converted into analog sound signals, and are output as sound from the speaker 4 via the amplification circuit 3.

Next, the writing of texture data by the image processor 12 is described with reference to Fig. 1.

As described above, the signal processor 11 performs computation based on commands from the CPU 6, and the image processor 12 performs, based on a result of the computation, the writing of image data to be rendered in the display area of the RAM 8.

The RAM 8 has a non-display area and the display area (frame buffer). In the non-display area, information recorded on the recording medium 5, such as polygon data, texture-selection data, and color data (texture data), are stored.

The polygons are two-dimensional virtual polygonal figures constituting objects provided in the game space, that is, models and game characters. In the first embodiment, triangles and quadrangles are used as the polygons. The textures are two-dimensional images that are pasted on the polygons so that images are formed. The color data specify the colors of the textures.

The polygon data, which are coordinate data on vertexes constituting the polygons, and the texture-selection data, which select textures corresponding to the polygons, are stored to be integrated.

Commands for rendering, generated by the CPU 6, include commands that use polygons to render three-dimensional images, and commands for rendering ordinary two-dimensional images.

Each command that uses polygons to render a three-dimensional image consists of a polygon-vertex-address data in the non-display area of the RAM 8; a texture-address data representing a position of the RAM 8 at which the texture data to be pasted on a polygon is stored; a color-address data representing a position in the display area of the RAM 8 at which the color data representing the color of a texture is stored; and a brightness data representing the brightness of the texture.

Among these data, the polygon-vertex-address data in the non-display area of the RAM 8 is replaced with a two-dimensional polygon-vertex-coordinate data by using the signal processor 11 to perform, based on moving-quantity_data and rotation-quantity data on a screen (viewpoint), coordinate transformation and the perspective projection transformation of polygon-vertex-coordinate data in a three-dimensional space from the CPU 6.

The two-dimensional polygon-vertex-address data represents an address in the display area of the RAM 8. The image processor 12 writes a texture data represented by a pre-assigned texture-address data in a range of the display area of the RAM 8 which is represented by three or four polygon-vertex-address data. Thereby, objects expressed by pasting textures on polygons are displayed on the screen of the TV monitor 2.

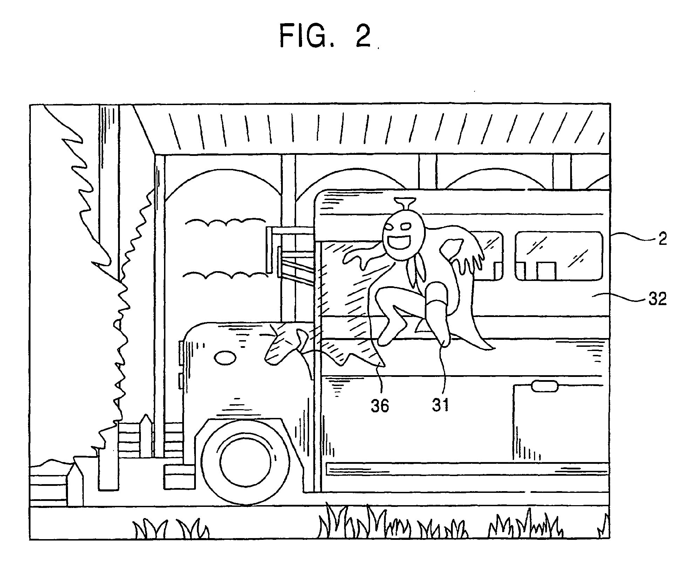

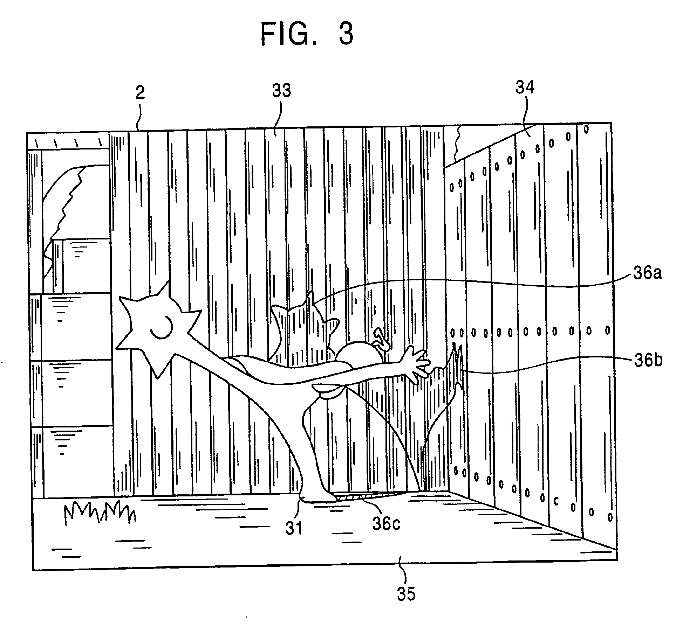

The video game performed by the game system 1 is briefly described with reference to Figs. 2 and 3. Figs. 2 and 3 show video game screens.

In the video game, a leading character 31 moves about as shown in Fig. 2. The leading character 31 is a graffito that came out from the body of a bus 32, and two-dimensionally consists of one polygon.

Background models provided further than the leading character 31 from a viewpoint, such as the bus 32 (shown in Fig. 2), and wooden walls 33 and 34, and a ground 35 (shown in Fig. 3), three-dimensionally consist of a plurality of polygons.

In Figs. 2 and 3, a shadow 36 of the leading character 31, caused by light from a virtual light source, is displayed.

In Fig. 2, the shadow 36 of the leading character 31 is displayed with its portion lost along the surface of the bus 32. In Fig. 3, a shadow 36a on the wall 33 as a background, a shadow 36b on the wall 34 perpendicular to the wall 33, and a shadow 36c on a ground 35 are displayed as shadows 36 of a leading character 31.

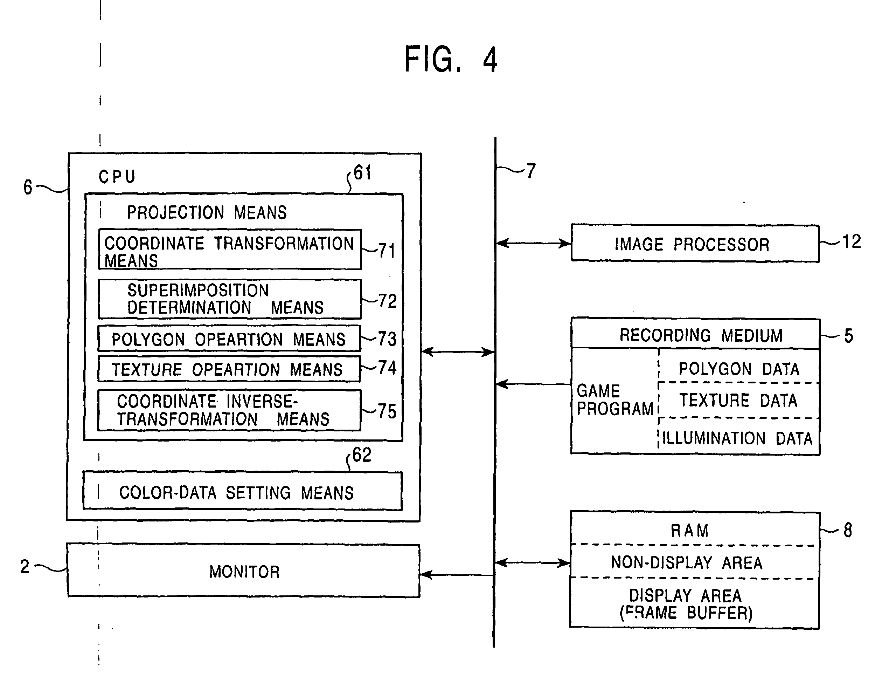

Fig. 4 shows a functional block diagram of the CPU 6, and portions of the game system 1. In Fig. 4, components between the bus 7 and each block are not shown.

In Fig. 4, the recording medium 5 contains a program for a game performed in a game space (virtual three-dimensional space). The program includes the coordinates of one polygon two-dimensionally constituting the leading character (Fig. 2), the coordinates of polygons three-dimensionally constituting the bus 32 (Fig. 2), and the walls 33 and 34, and the ground 35 (Fig. 3), and the coordinates of a virtual light source.

The program includes textures indicating various postures of the leading character 31 as shown in Figs. 2 and 3, and textures indicating the respective background models.

The program includes data representing shades, as data specifying the colors of the textures.

The CPU 6 includes a projection means 61 and a color-data setting means 62.

The projection means 61 includes a coordinate-transformation means 71, a superimposition determination means 72, a polygon-operation means 73, a texture operation means 74, and a coordinate inverse-transformation means 75, and performs processing for displaying game character shades.

Concerning -displaying game-character shades, it is required that the shade of a game character be displayed only where the character is superimposed on a background model without being displayed where the character is superimposed. Accordingly, the superimposition portions are found by the projection means 61.

The coordinate-transformation means 71 projects each vertex of polygons constituting the background models (hereinafter referred to as "model polygons") onto a plane including polygons (hereinafter referred to as "character polygons") constituting the leading character 31.

The projection is performed by finding the coordinates of points at which straight lines between the vertices of a polygon model 41 and a virtual source 42 intersect with a plane 44 including a character polygon 43. A polygon 45 consisting of the respective points is hereinafter referred to as a "projected polygon".

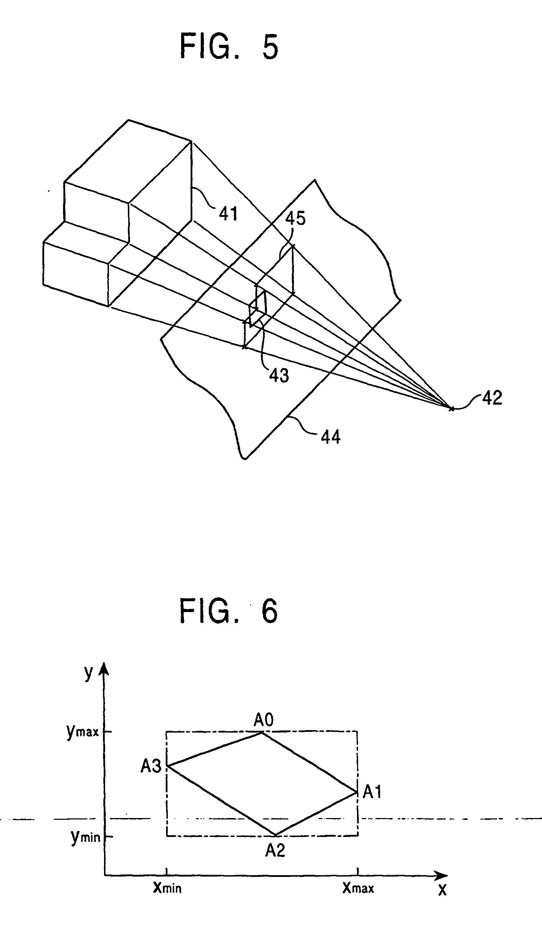

The superimposition determination means 72 (shown in Fig. 4) determines whether the projection polygon 45 (shown in Fig. 5) is superimposed on the character polygon 43 (shown in Fig. 5).

If the superimposition determination means 72 has determined that the projected polygon 45 is superimposed on the character polygon 43, the polygon-operation means 73 computes a vertex list of a common polygon formed by superimposition of the character polygon 43 and the projected polygon 45.

The vertex list has coordinate data on the vertices of the common polygon, and data about the vertices. For creating the common polygon, it is required that not only the coordinate data on vertices but also the order of the vertices be known. Accordingly, the common polygon is created by computing the vertex list. In this embodiment, the order of the common polygon is set to be clockwise.

The texture operation means 74 computes differences between the vertices of the common polygon and the vertices of the character polygon 43, and computes, based on the differences, the texture coordinates of the common polygon.

This processing is performed in order that in the texture indicating the leading character 31, only an area corresponding to the common polygon may be pasted onto an inversely projected polygon (described below). Thereby, the shadow 36 whose part is lost along the shape of the bus 32 can be displayed as shown in Fig. 2.

The coordinate inverse-transformation means 75 obtains an inversely projected polygon by projecting the obtained polygon onto the plane of the original polygon.

This projection is performed, similarly to the projection by the coordinate-transformation means 71, by finding the coordinates of points at which lines between the vertices of the common polygon and the virtual light source 42 intersect with a plane including the model polygon 41.

The color-data setting means 62 sets, as texture-color data to be pasted onto the common polygon, color data (recorded on the recording medium 5) representing shade.

The image processor 12 pastes a texture based on set texture coordinates onto an inversely projected polygon obtained by projecting the common polygon onto the plane of the original model polygon. At the same time, the image processor 12 writes a color data representing set shade in the display area of the RAM 8.

For obtaining a texture-color data, by mixing the color data representing set shade and a color data on the background model at a predetermined ratio, and writing the obtained color data in the display area of the RAM 8, shade can be displayed with more virtual reality.

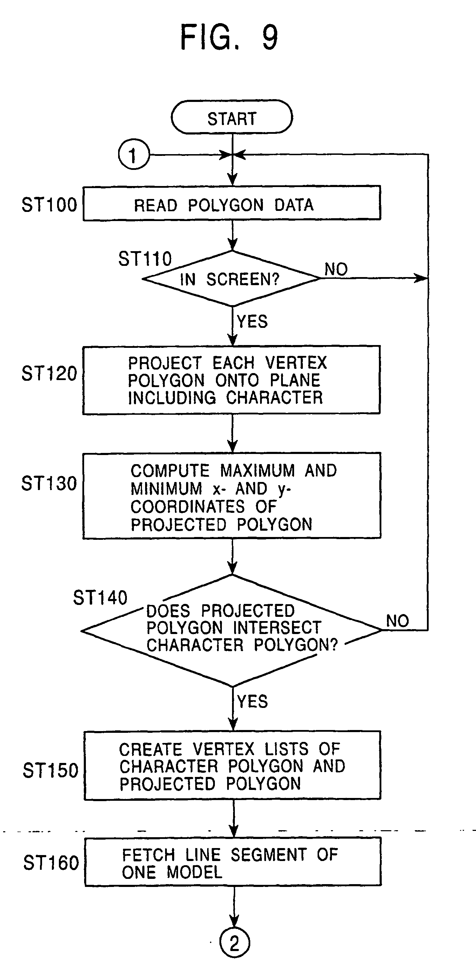

With reference to Figs. 6 to 8, a process for displaying shade is described based on the flowcharts shown in Figs. 9 to 11.

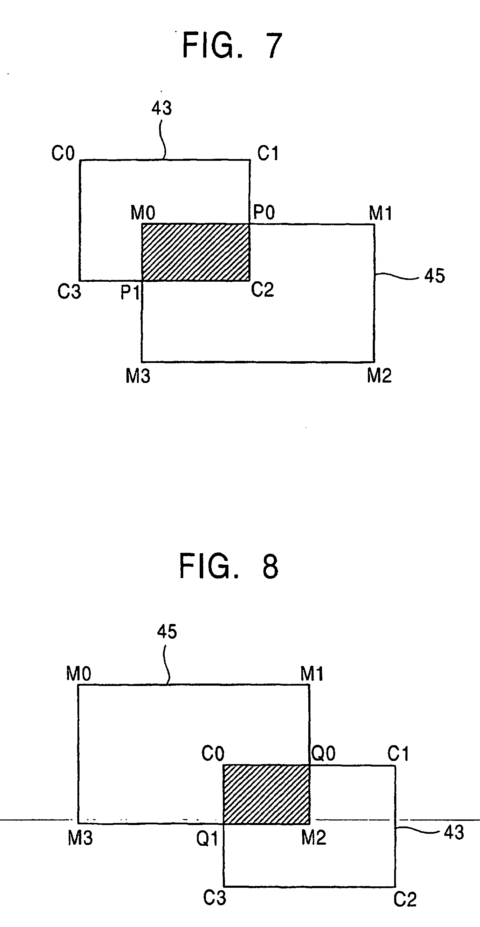

Fig. 6 shows polygon superimposition determination. Figs. 7 and 8 show superimposition of the character polygon 43 and the projected polygon 45. Fig. 9 shows a process for displaying shade.

In Fig. 9, in step ST100, the coordinates of a model polygon, recorded on the recording medium 5, are read and stored in the RAM 8. In step ST110, the process determines whether the model polygon is displayed in the screen of the TV monitor 2 when a set position is used as a viewpoint. If no model polygon is displayed in the screen of the monitor 2 ("NO" in step ST110), the process returns to step ST100, and the coordinates of a polygon constituting the next model are read.

If there are the coordinates of the read polygon in the screen of the TV monitor 2 ("YES" in step ST110), the vertices of the polygon are projected onto a plane including a character polygon, and the coordinates of points of intersection are computed (step ST 120).

In step ST130, maximum and minimum x- and y-coordinates of the projected polygon are computed.

By way of example, in the case of a polygon comprised of vertices A0, A1, A2, and A3,
a maximum of x-coordinates is represented by xₘₐₓ,
a minimum of x-coordinates is represented by xₘᵢₙ,
a maximum of y-coordinates is represented by yₘₐₓ, and
a minimum of y-coordinates is represented by yₘᵢₙ.

Referring back to Fig. 9, in step ST140, the process determines whether the projected is superimposed onto the character polygon. In other words, by using the maximum and minimum x- and y-coordinates of the projected polygon and the character polygon, it is determined whether both polygons can be superimposed onto each other.

By way of example, when as to the projected polygon,
a maximum of x-coordinates is represented by mxₘₐₓ,
a minimum of x-coordinates is represented by mxₘᵢₙ,
a maximum of y-coordinates is represented by myₘₐₓ, and
a minimum of y-coordinates is represented by myₘᵢₙ, and
as to the character polygon,
a maximum of x-coordinates is represented by cxₘₐₓ,
a minimum of x-coordinates is represented by cxₘᵢₙ,
a maximum of y-coordinates is represented by cyₘₐₓ, and
a minimum of y-coordinates is represented by cyₘᵢₙ,
among the following inequalities:
cxₘₐₓ < mxₘᵢₙ;
cxₘᵢₙ > mxₘₐₓ;
cyₘₐₓ < myₘᵢₙ; and
cyₘᵢₙ > myₘₐₓ;
one inequality is satisfied, the process determines that both polygons cannot be superimposed onto each other.

If both polygons cannot be superimposed ("NO" in step ST140), the process returns to step ST100.

If both polygons can be superimposed ("YES" in step ST140), a vertex list on the character polygon, and a vertex list on the projected polygon are created in step ST150.

A vertex list on the character polygon 43 shown in Fig. 7 is represented by
C0(Cvtx0)-C1(Cvtx1)-C2(Cvtx2)-C3(Cvtx3)-C0(Cvtx0)-....
A vertex list on the polygon 45 shown in Fig. 7 is represented by
M0(Mvtx0)-M1(Mvtx1)-M2(Mvtx2)-M3(Mvtx3)-M0(Mvtx0)-....

In these numerical expressions, Cvtx0, Cvtx1, Cvtx2, and Cvtx3 represent coordinate data on vertices C0, C1, C2, and C3, respectively, and Mvtx0, Mvtx1, Mvtx2, and Mvtx3 represent coordinate data on vertices M0, M1, M2, and M3, respectively.

In step ST160 (shown in Fig. 9), one line segment (hereinafter referred to as a "model line segment") forming one side of the projected polygon 45 is fetched.

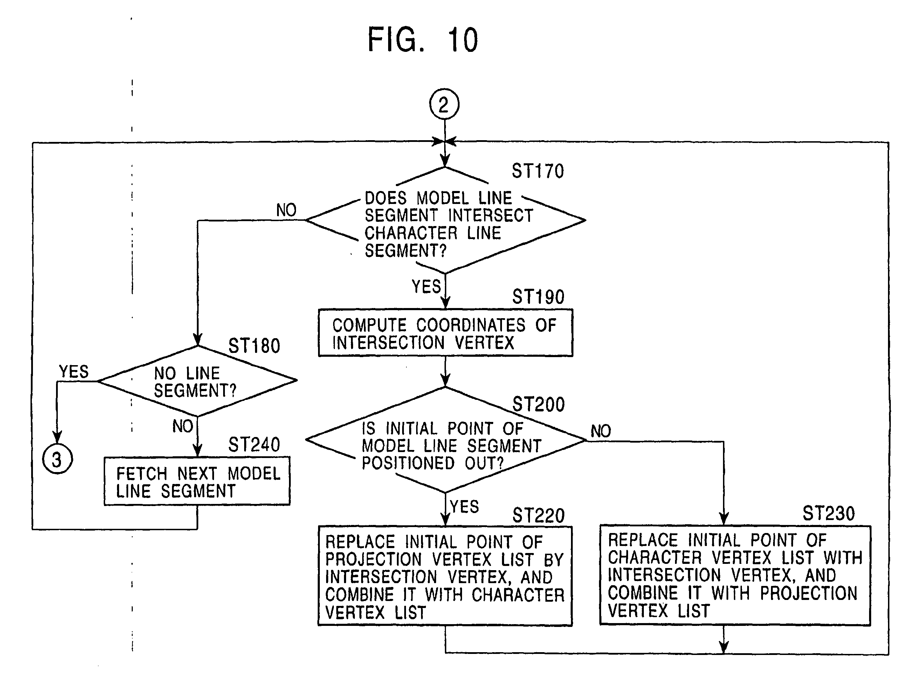

In step ST170 (shown in Fig. 10), by using, for example, a known flag-status determination technique, it is determined whether the model line segment intersects with each line segment (hereinafter referred to as a "character line segment") constituting the character polygon 43.

If both line segments do not intersect ("NO" in step ST170), the process proceeds to step ST180. If both line segments intersect ("YES" in step ST170), the coordinates of points at which both line segments intersect are computed in step ST190.

In step ST200, the process determines whether there is the initial point of the model line segment outside the character polygon 43. If there is not the initial point outside the character polygon 43 ("NO" in step ST200), the process proceeds to step ST230.

If, in step ST200, the initial point of the model line segment is outside the character polygon 43 ("YES" in step ST200), in step ST220, the coordinate data (in the vertex list of the projected polygon) on the initial point of the model segment having intersected are replaced by coordinate data on vertices of intersection, and the replaced coordinate data are combined with the vertex list on the character polygon 43. The process returns to step ST170, and it determines whether the model line segment intersects with another character segment.

In step ST230, the coordinate data (in the vertex list of the character polygon 43) on the initial point of the character line segment having intersected are replaced by coordinate data on vertices of intersection, and the replaced coordinate data are combined with the vertex list on the projected polygon. The process returns to step ST170, and it determines whether the model line segment intersects with another character segment.

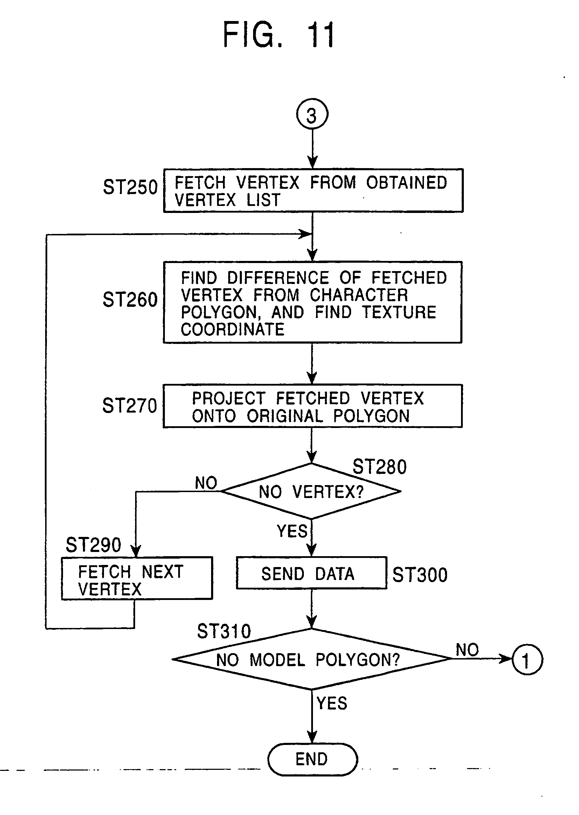

In step ST180, the process determines whether no model line segment to be fetched is detected. If a model line segment is detected ("NO" in step ST180), the next model line segment is fetched (step ST240) before the process returns to step ST170. If no model line segment is detected ("YES" in step ST180), the process proceeds to step ST250 (shown in Fig. 11).

With reference to Fig. 7, steps ST160 to ST240 are described. In Fig. 7, a coordinate data on vertex P0 of intersection is represented by Pvtx0, and a coordinate data on vertex P1 of intersection is represented by Pvtx1.

When model line segment M0M1 is fetched in step ST160, coordinate data Pvtx0 on vertex P0 of intersection is computed in step ST190 because the line segment intersects with character line segment C1C2. Since the terminal point M1 of the model line segment M0M1 is outside, the process proceeds from step ST200 to step ST230.

In step ST230, in the following vertex list on the character polygon 43:
C0(Cvtx0)-C1(Cvtx1)-C2(Cvtx2)-C3(Cvtx3)-C0(Cvtx0)-...,
a coordinate data on the initial point C1 of character line segment C1C2 having intersected is replaced by a coordinate data on vertex P0 of intersection. Thereby, the vertex list on the character polygon 43 is expressed as follows:
C0(Cvtx0)-C1(Pvtx0)-C2(Cvtx2)-C3(Cvtx3)-C0(Cvtx0)-....

In addition, in the following vertex list on the projected polygon 45:
M0(Mvtx0)-M1(Mvtx1)-M2(Mvtx2)-M3(Mvtx3)-M0(Mvtx0)-...,
lists after coordinate data Pvtx0 (in the vertex list on the character polygon 43) on vertex P0 of intersection are combined with the initial point M0 of model line segment M0M1 having intersected.

Thereby, the desired vertex list:
M0(Mvtx0)-C1(Pvtx0)-C2(Cvtx2)-C3(Cvtx3)-C0(Cvtx0)-C1(Pvtx0)-... is temporarily obtained.

In step ST240, model line segments M1M2 and M2M3 are fetched. The desired vertex list does not change since both line segments do not intersect with the character line segment ("NO" in step ST170).

When model line segment M3M0 is fetched in step ST240, coordinate data Pvtx1 on vertex P1 of intersection is computed in step ST190 because the line segment M3M0 intersects with character line segment C2C3. The initial point M3 of line segment M3M0 is outside the common polygon. Accordingly, the process proceeds from step ST200 to step ST220.

In step ST220, in the vertex list on the projected polygon 45, a coordinate data on the initial point M3 of line segment M3M0 having intersected is replaced by a coordinate data on vertex P1 of intersection.

In the temporarily obtained, desired vertex list, a vertex having a coordinate data on vertex P1 of intersection, that is, vertex M3, is combined with the initial point of line segment C2C3.

Thereby, the desired vertex list:
M0(Mvtx0)-C1(Pvtx0)-C2(Cvtx2)-M3(Pvtx1)-M0(Mvtx0)-C1(Pvtx0)-... is finally obtained.

This vertex list has coordinate data on the vertices of the common polygon (the shading portion shown in Fig. 7) formed by intersection of the character polygon 43 and the projected polygon 45, and data on the order of the vertices.

Steps ST160 to ST240 for other superimposition of the character polygon 43 and the projected polygon 45 are described with reference to Fig. 8. In Fig. 8, a coordinate data on vertex Q0 of intersection is represented by Qvtx0, and a coordinate data on vertex Q1 of intersection is represented by Qvtx1.

When model line segment M0M1 is fetched in step ST160, the process determines negatively ("NO" in step ST170) since model line segment M0M1 does not intersect with the character polygon 43, and the next model line segment M1M2 is fetched. Since the fetched line segment M1M2 intersects with character line segment C0C1, in step ST190, coordinate data Qvtx0 on vertex Q0 of intersection is computed. The initial point M1 of model line segment M1M2 is outside the common polygon. Accordingly, the process proceeds from step ST200 to step ST220.

In step ST220, in the following vertex list on the projected polygon 45:
M0(Mvtx0)-M1(Mvtx1)-M2(Mvtx2)-M3(Mvtx3)-M0(Mvtx0)-..., the coordinate data on the initial point M1 of model line segment M1M2 having intersected is replaced by the coordinate data on vertex Q1 of intersection. Thereby, the vertex list on the projected polygon 45 is as follows:
   M0(Mvtx0)-M1(Qvtx0)-M2(Mvtx2)-M3(Mvtx3)-M0(Mvtx0)-...

In the following vertex list on the character polygon 43:
C0(Cvtx0)-C1(Cvtx1)-C2(Cvtx2)-C3(Cvtx3)-C0(Cvtx0)-..., the vertex based on coordinate data Qvtx of vertex Q0 of intersection in the vertex list on the projected polygon 45 is combined with the initial point C0 of character line segment C0C1 having intersected.

Thereby, the temporary, desired vertex list:
C0(Cvtx0)-M1(Qvtx0)-M2(Mvtx2)-M3(Mvtx3)-M0(Mvtx0)-M1(Qvtx0)-... is obtained.

When model line segment M2M3 is fetched in step ST240, coordinate data Qvtx1 on vertex Q1 of intersection is computed in step ST190 because the fetched line segment intersects with character line segment C3C0. The end point M3 of model line segment M2M3 is outside the common polygon. Accordingly, the process proceeds from step ST210 to step ST230.

In step ST230, in the vertex list on the character polygon 43, the coordinate data on initial point C3, which is out of character line segment C3C0 is replaced, by the coordinate data on vertex Q1 of intersection.

In the temporary, desired vertex list, a vertex having the coordinate data on character polygon vertex Q1 of intersection, that is, vertex C3, is combined with initial point M2 inner than model line segment M2M3 having intersected.

Thereby, the final, desired vertex list:
C0(Cvtx0)-M1(Qvtx0)-M2(Mvtx2)-C3(Qvtx1)-C0(Cvtx0)-M1(Qvtx0)-... is obtained.

The obtained, desired vertex list has coordinate data on the vertices of the common polygon (the shading part shown in Fig. 8) formed by intersection of the character polygon 43 and the projected polygon 45, and data on the order of the vertices.

Referring back to Fig. 11, step ST250 and the subsequent steps are described.

In step ST250, a vertex (e.g., vertex M0 in Fig. 7) is fetched from the obtained vertex list. In step ST260, the difference between the fetched vertex and a reference vertex (e.g., vertex C0 in Fig. 7) of the character polygon 43 is found, and the texture coordinates of the fetched vertex are found based on the difference.

The vertex is projected from a character-polygon-included plane onto the original polygon plane in step ST120, and the coordinates of a point of intersection is found in step ST270.

In step ST280, it is determined whether a vertex to be fetched has been detected. If a vertex to be fetched is detected ("NO" in step ST280), the next vertex (e.g., vertex P0 in Fig. 7) in the vertex list is fetched in step ST290, and the process returns to step ST260.

If no vertex to be fetched is detected ("YES" in step ST280), data on the obtained vertex list, and the texture coordinate data are sent from the CPU 6 to the image processor 12 in step ST300.

Next, in step ST310, it is determined whether a polygon model has been detected. If a polygon model has been detected ("NO" in step ST310), the process returns to step ST100 (shown in Fig. 9). If no polygon model has been detected ("YES" in step ST310), the process ends.

For the background models such as the bus 32 (shown in Fig. 2), the wooden walls 33 and 34, and the ground 35 (shown in Fig. 3), the above-described process is performed.

As described above, according to this embodiment, by displaying the shadow 36 of the two-dimensional leading character 31 on background models, the leading character 31 can be clearly displayed so as to be closer to a viewpoint than the background models, namely, the bus 32 (shown in Fig. 2) and the wooden walls 33 and 34 (shown in Fig. 3).

By displaying the shadow 36 on three-dimensional background models, the virtual reality of the shadow 36 can be enhanced.

By projecting a model polygon onto a plane including a character polygon so that a projected polygon is computed, and determining in a two-dimensional system whether the character polygon is superimposed on the projected polygon, a common polygon can be easily computed without an increase in computing load.

The present invention is not limited to the above-described embodiment. However, the following modifications (1) to (3) of the present invention may be employed.
(1) Not only coordinate data actually used for rendering on a monitor, but also simplified coordinate data including necessarily minimum shape data, may be used as coordinate data on polygons constituting background models.
(2) The position of a virtual light source may be set to be far from a leading character, for example, at an approximately infinite distant position. In this case, a virtual effect in which a shadow formed by sunlight is expressed can be obtained.
(3) The functional blocks of the projection means 61 may have the following functions. The coordinate-transformation means 71 finds the vertices of a three-dimensionally transformed polygon comprised of points at which straight lines between the vertices of a character polygon and a virtual light source intersect with a model polygon. The superimposition determination means 72 determines whether the three-dimensionally transformed polygon is superimposed on the model polygon. The polygon-operation means 73 computes a superimposition polygon composed of an area on which the three-dimensionally transformed polygon is superimposed on the model polygon.

The texture operation means 74 projects the superimposition polygon onto a plane including the character polygon, similarly to projection by the coordinate-transformation means 71 in the above-described embodiment. The texture operation means 74 computes differences between the coordinates of the projected polygon and the coordinates of the character polygon, and computes, based on the difference, the texture coordinates of the superimposition polygon.

Also, in this modification, a shadow can be displayed as in the above-described embodiment. This modification eliminates the need for the coordinate inverse-transformation means 75 as a functional block of the projection means 61.

## Claims

1. An image creating apparatus for using a viewpoint as a reference to create the image of a game character (31) and the image of a model behind said game character (31) in a virtual three-dimensional space and to display the images on a display means (2), wherein said image creating apparatus comprises:
model-polygon storage means (5) for storing the coordinates of model polygons constituting the model image;
character-polygon storage means (5) for storing the coordinates of a two-dimensional character polygon forming the character image;
model-texture storage means (5) for storing a texture indicating the model image;
character-texture storage means (5) for storing a texture indicating the character image;
light-source storage means (5) for storing the coordinates of a virtual light source provided in said three-dimensional space; and
projection means (61) for computing the shape of said character polygon which is projected onto the model image by said virtual light source;
**characterized by**
coordinate-transformation means (71) for computing the coordinates of a projected polygon comprised of points at which straight lines between the vertices of each model polygon and said virtual light source intersect with a plane including said character polygon;
polygon-operation means (73) for computing the coordinates of a common polygon formed by an area on which said projected polygon is superimposed on said character polygon;
texture operation means (74) for computing the texture coordinates of said common polygon, based on differences between the coordinates of said character polygon and the coordinates of said common polygon; and
coordinate inverse-transformation means (75) for computing the coordinates of an inversely projected polygon comprised of points at which straight lines between the coordinates of said common polygon and said virtual light source intersect with a plane including said model polygon; and
color-data setting means (62) for setting color data on said inversely projected polygon so as to represent the shadow (36).

2. An image creating apparatus according to Claim 1, wherein the model image stored in said model-polygon storage means (5) comprises a plurality of three-dimensional model polygons as said model polygons.

3. An image creating apparatus according to any one of Claims 1 or 2, wherein said color-data setting means (62) uses, as said color data representing the shadow (36) of said character (31), data obtained by increasing the concentration of color data on the texture image stored in said model-texture storage means.

4. An image creating method for using a viewpoint as a reference to create the image of a game character (31) and the image of a model behind said game character in a virtual three-dimensional space and to display the images on a display means (2), wherein said image creating method comprises the steps of:
storing the coordinates of model polygons constituting the model image;
storing the coordinates of a two-dimensional character polygon forming the character image; and
finding the shape of the character image as a two-dimensional image which is projected onto the model image as a three-dimensional image by a virtual light source provided in said virtual three-dimensional space;
**characterized by**
computing the coordinates of a projected polygon comprised of points at which straight lines between the vertices of each model polygon and said virtual light source intersect with a plane including said character polygon;
computing the coordinates of a common polygon formed by an area on which said projected polygon is superimposed on said character polygon;
computing the texture coordinates of said common polygon, based on differences between the coordinates of said character polygon and the coordinates of said common polygon; and
computing the coordinates of an inversely projected polygon comprised of points at which straight lines between the coordinates of said common polygon and said virtual light source intersect with a plane including said model polygon; and
setting color data on said inversely projected polygon so as to represent the shadow (36).

5. A computer-readable recording medium containing an image creating program for using a viewpoint as a reference to create the image of a game character (31) and the image of a model behind said game character in a virtual three-dimensional space and to display the images on a display means (2), wherein said image creating program comprises
storing the coordinates of model polygons constituting the model image;
storing the coordinates of a two-dimensional character polygon forming the character image; and
a step for finding the shape of the character image as a two-dimensional image which is projected onto the model image as a three-dimensional image by a virtual light source provided in said virtual three-dimensional space;
**characterized by**
computing the coordinates of a projected polygon comprised of points at which straight lines between the vertices of each model polygon and said virtual light source intersect with a plane including said character polygon;
computing the coordinates of a common polygon formed by an area on which said projected polygon is superimposed on said character polygon;
computing the texture coordinates of said common polygon, based on differences between the coordinates of said character polygon and the coordinates of said common polygon; and
computing the coordinates of an inversely projected polygon comprised of points at which straight lines between the coordinates of said common polygon and said virtual light source intersect with a plane including said model polygon; and
setting color data on said inversely projected polygon so as to represent the shadow (36).

## Patentansprüche

1. Bilderzeugungsvorrichtung zum Verwenden eines Blick- bzw. Gesichtspunkts bzw. Blickwinkels als einen Bezug, um das Bild eines Spielcharakters bzw. einer Spielfigur (31) und das Bild eines Modells hinter dem Spielcharakter (31) in einem virtuellen dreidimensionalen Raum zu erzeugen und um die Bilder auf Anzeigemitteln (2) anzuzeigen, wobei die Bilderzeugungsvorrichtung umfaßt:
Modell-Polygon-Speichermittel (5) zum Speichern der Koordinaten von ModellPolygonen, die das Modellbild ausbilden bzw. darstellen;
Charakter-Polygon-Speichermittel (5) zum Speichern der Koordinaten eines zweidimensionalen Charakter-Polygons, der das Charakterbild ausbildet;
Modell-Textur-Speichermittel (5) zum Speichern einer Textur, die das Modellbild anzeigen;
Charakter-Textur-Speichermittel (5) zum Speichern einer Textur, die das Charakterbild anzeigt;
Lichtquellen-Speichermittel (5) zum Speichern der Koordinaten einer virtuellen Lichtquelle, die in dem dreidimensionalen Raum zur Verfügung gestellt ist; und
Projektionsmittel (61) zum Berechnen der Form des Charakterpolygons, welches auf das Modellbild durch die virtuelle Lichtquelle projiziert ist;
**gekennzeichnet durch**
Koordinaten-Transformationsmittel (71) zum Berechnen der Koordinaten eines projizierten Polygons, aufweisend Punkte, an welchen gerade Linien zwischen den Scheiteln von jedem Modellpolygon und der virtuellen Lichtquelle eine Ebene schneiden bzw. kreuzen, die das Charakterpolygon enthält;
Polygon-Betriebs- bzw. Betätigungsmittel (73) zum Berechnen der Koordinaten eines gemeinsamen Polygons, das **durch** eine Fläche bzw. einen Bereich ausgebildet ist, auf welcher(m) das projizierte Polygon dem Charakterpolygon überlagert ist;
Textur-Betätigungsmittel (74) zum Berechnen der Texturkoordinaten des gemeinsamen Polygons basierend auf Unterschieden zwischen den Koordinaten des Charakterpolygons und den Koordinaten des gemeinsamen Polygons; und
Koordinaten-Umkehrtransformationsmittel (75) zum Berechnen der Koordinaten eines invers projizierten Polygons bestehend aus Punkten, an welchen gerade Linien zwischen den Koordinaten des gemeinsamen Polygons und der virtuellen Lichtquelle eine Ebene schneiden bzw. kreuzen, welche das Modell-Polygon enthält; und
Farbdaten-Festlegungs- bzw. Setzmittel (62) zum Festlegen bzw. Setzen von Farbdaten auf dem umgekehrt projizierten Polygon, um den Schatten (36) darzustellen.

2. Bilderzeugungsvorrichtung nach Anspruch 1, wobei das Modellbild, das in den Modell-Polygon-Speichermitteln (5) gespeichert ist, eine Mehrzahl von dreidimensionalen Modellpolygonen als die Modellpolygone umfaßt.

3. Bilderzeugungsvorrichtung nach einem der Ansprüche 1 oder 2, wobei die Farbdaten-Festlegungsmittel (62) als die Farbdaten, die den Schatten (36) des Charakters (31) darstellen, Daten verwenden, die durch ein Erhöhen der Konzentration von Farbdaten auf dem Texturbild erhalten sind, das in den Modelltextur-Speichermitteln gespeichert ist.

4. Bilderzeugungsverfahren zum Verwenden eines Blick- bzw. Gesichtspunkts bzw. Blickwinkels als einen Bezug, um das Bild eines Spielcharakters bzw. einer Spielfigur (31) und das Bild eines Modells hinter dem Spielcharakter in einem virtuellen dreidimensionalen Raum zu erzeugen, und um die Bilder auf Anzeigemitteln (2) anzuzeigen, wobei das Bilderzeugungsverfahren die Schritte umfaßt:
Speichern der Koordinaten von Modellpolygonen, die das Modellbild ausbilden bzw. darstellen;
Speichern der Koordinaten eines zweidimensionalen Charakter-Polygons, das das Charakterbild ausbildet; und
Finden bzw. Auffinden bzw. Ermitteln bzw. Erlangen der Form bzw. Gestalt des Charakterbilds als ein zweidimensionales Bild, welches auf das Modellbild als ein dreidimensionales Bild durch eine virtuelle Lichtquelle projiziert wird, die in dem virtuellen dreidimensionalen Raum zur Verfügung gestellt wird;
**gekennzeichnet durch**
ein Berechnen der Koordinaten eines projizierten Polygons bestehend aus Punkten, an welchen gerade Linien zwischen den Scheiteln von jedem Modellpolygon und der virtuellen Lichtquelle eine Ebene schneiden bzw. kreuzen, die das Charakterpolygon enthält;
ein Berechnen der Koordinaten eines gemeinsamen Polygons, das **durch** einen Bereich ausgebildet wird, auf welchem das projizierte Polygon dem Charakterpolygon überlagert wird;
ein Berechnen der Texturkoordinaten des gemeinsamen Polygons basierend auf Unterschieden zwischen den Koordinaten des Charakterpolygons und den Koordinaten des gemeinsamen Polygons; und
ein Berechnen der Koordinaten eines umgekehrt projizierten Polygons aufweisend Punkte, an welchen gerade Linien zwischen den Koordinaten des gemeinsamen Polygons und der virtuellen Lichtquelle eine Ebene schneiden bzw. kreuzen, die das Modellpolygon enthält; und
Festlegen bzw. Setzen von Farbdaten auf dem umgekehrt projizierten Polygon, um den Schatten (36) darzustellen.

5. Computer-lesbares Aufzeichnungsmedium, enthaltend ein Bilderzeugungsprogramm zum Verwenden eines Blick- bzw. Gesichtspunkts bzw. Blickwinkels als einen Bezug, um das Bild eines Spielcharakters bzw. einer Spielfigur (31) und das Bild eines Modells hinter dem Spielcharakter in einem virtuellen dreidimensionalen Raum zu erzeugen, und um die Bilder auf Anzeigemitteln (2) anzuzeigen, wobei das Bilderzeugungsprogramm umfaßt
ein Speichern der Koordinaten von Modellpolygonen, die das Modellbild ausbilden bzw. darstellen;
ein Speichern der Koordinaten eines zweidimensionalen Charakterpolygons, das das Charakterbild ausbildet; und
einen Schritt zum Finden der Form bzw. Gestalt des Charakterbilds als ein zweidimensionales Bild, welches auf das Modellbild als ein dreidimensionales Bild durch eine virtuelle Lichtquelle projiziert wird, die in dem virtuellen dreidimensionalen Raum zur Verfügung gestellt wird;
**gekennzeichnet durch**
ein Berechnen der Koordinaten eines projizierten Polygons aufweisend Punkte, an welchen gerade Linien zwischen den Scheiteln von jedem Modellpolygon und der virtuellen Lichtquelle eine Ebene schneiden bzw. kreuzen, die das Charakterpolygon enthält;
ein Berechnen der Koordinaten eines gemeinsamen Polygons, das **durch** einen Bereich ausgebildet wird, auf welchem das projizierte Polygon dem Charakterpolygon überlagert wird;
ein Berechnen der Texturkoordinaten des gemeinsamen Polygons basierend auf Unterschieden zwischen den Koordinaten des Charakterpolygons und den Koordinaten des gemeinsamen Polygons; und
ein Berechnen der Koordinaten eines umgekehrt projizierten Polygons bestehend aus Punkten, an welchen gerade Linien zwischen den Koordinaten des gemeinsamen Polygons und der virtuellen Lichtquelle eine Ebene schneiden bzw. kreuzen, die das Modellpolygon enthält; und
Festlegen bzw. Setzen von Farbdaten auf dem umgekehrt projizierten Polygon, um den Schatten (36) darzustellen.

## Revendications

1. Appareil de génération d'image pour utiliser un point de vue comme référence pour générer l'image d'un personnage de jeu (31) et l'image d'un modèle derrière ledit personnage de jeu (31) dans un espace tridimensionnel virtuel et pour afficher les images sur un moyen d'affichage (2), dans lequel ledit appareil de génération d'image comprend :
un moyen de stockage de polygone modèle (5) pour stocker les coordonnées de polygones modèles constituant l'image modèle ;7
un moyen de stockage de polygone de personnage (5) pour stocker les coordonnées d'un polygone de personnage bidimensionnel formant l'image de personnage ;
un moyen de stockage de texture modèle (5) pour stocker une texture indiquant l'image modèle ;
un moyen de stockage de texture de personnage (5) pour stocker une texture indiquant l'image de personnage ;
un moyen de stockage d'une source de lumière (5) pour stocker les coordonnées d'une source de lumière virtuelle proposée dans ledit espace tridimensionnel ; et
un moyen de projection (61) pour calculer la forme dudit polygone de personnage qui est projeté sur l'image modèle par ladite source de lumière virtuelle ;
**caractérisé par**
un moyen de transformation de coordonnées (71) pour calculer les coordonnées d'un polygone projeté constitué de points auxquels des lignes droites entre les sommets de chaque polygone modèle et ladite source de lumière virtuelle coupent un plan comprenant ledit polygone de personnage ;
un moyen d'opération de polygone (73) pour calculer les coordonnées d'un polygone commun formé par une zone sur laquelle ledit polygone projeté est superposé sur ledit polygone de personnage ;
un moyen d'opération de texture (74) pour calculer les coordonnées de texture dudit polygone commun, sur la base des différences entre lesdites coordonnées de polygone de personnage et les coordonnées dudit polygone commun ; et
un moyen de transformation inverse de coordonnées (75) pour calculer les coordonnées d'un polygone projeté à l'envers constitué de points auxquels des lignes droites entre les coordonnées dudit polygone commun et ladite source de lumière virtuelle coupent un plan comprenant ledit polygone modèle ; et
un moyen de définition de données de couleur (62) pour définir des données de couleur sur ledit polygone projeté à l'envers afin de représenter l'ombre (36).

2. Appareil de génération d'image selon la revendication 1, dans lequel l'image modèle stockée dans ledit moyen de stockage de polygone modèle (5) comprend une pluralité de polygones modèles tridimensionnels comme lesdits polygones modèles.

3. Appareil de génération d'image selon l'une quelconque des revendications 1 ou 2, dans lequel ledit moyen de définition de données de couleur (62) utilise, comme dites données de couleur représentant l'ombre (36) dudit personnage (31), des données obtenues en augmentant la concentration de données de couleur sur l'image de texture stockée dans ledit moyen de stockage de texture modèle.

4. Procédé de génération d'image pour utiliser un point de vue comme référence pour générer l'image d'un personnage de jeu (31) et l'image d'un modèle derrière ledit personnage de jeu dans un espace tridimensionnel virtuel et pour afficher les images sur un moyen d'affichage (2), dans lequel ledit procédé de génération d'image comprend les étapes consistant à :
stocker les coordonnées de polygones modèles constituant l'image modèle ;
stocker les coordonnées d'un polygone de personnage bidimensionnel formant l'image du personnage ; et
rechercher la forme de l'image du personnage comme une image bidimensionnelle qui est projetée sur l'image modèle comme une image tridimensionnelle par une source de lumière virtuelle proposée dans ledit espace tridimensionnel virtuel ;
**caractérisé par**
le calcul des coordonnées d'un polygone projeté constitué de points auxquels des lignes droites entre les sommets de chaque polygone modèle et ladite source de lumière virtuelle coupent un plan comprenant ledit polygone de personnage ;
le calcul des coordonnées d'un polygone commun formé par une zone sur laquelle ledit polygone projeté est superposé sur ledit polygone de personnage ;
le calcul des coordonnées de texture dudit polygone commun, sur la base des différences entre les coordonnées dudit polygone de personnage et les coordonnées dudit polygone commun ; et
le calcul des coordonnées d'un polygone projeté à l'envers constitué de points auxquels des lignes droites entre les coordonnées dudit polygone commun et ladite source de lumière virtuelle coupent un plan comprenant ledit polygone modèle ; et
la définition de données de couleur sur ledit polygone projeté à l'envers afin de représenter l'ombre (36).

5. Support d'enregistrement lisible sur ordinateur contenant un programme de génération d'image pour utiliser un point de vue comme référence pour générer l'image d'un personnage de jeu (31) et l'image d'un modèle derrière ledit personnage de jeu dans un espace tridimensionnel virtuel et pour afficher les images sur un moyen d'affichage (2), dans lequel ledit programme de génération d'image comprend
le stockage des coordonnées de polygones modèles constituant l'image modèle ;
le stockage des coordonnées d'un polygone de personnage bidimensionnel formant l'image de personnage ; et
une étape pour trouver la forme de l'image du personnage comme une image bidimensionnelle qui est projetée sur l'image modèle comme une image tridimensionnelle par une source de lumière virtuelle proposée dans ledit espace tridimensionnel virtuel ;
**caractérisé par**
le calcul des coordonnées d'un polygone projeté constitué de points auxquels des lignes droites entre les sommets de chaque polygone modèle et ladite source de lumière virtuelle coupent un plan comprenant ledit polygone de personnage ;
le calcul des coordonnées d'un polygone commun formé par une zone sur laquelle ledit polygone projeté est superposé sur ledit polygone de personnage ;
le calcul des coordonnées de texture dudit polygone commun, sur la base des différences entre les coordonnées dudit polygone de personnage et les coordonnées dudit polygone commun ; et
le calcul des coordonnées d'un polygone projeté à l'envers constitué de points auxquels des lignes droites entre les coordonnées dudit polygone commun et ladite source de lumière virtuelle coupent un plan comprenant ledit polygone modèle ; et
la définition de données de couleur sur ledit polygone projeté à l'envers afin de représenter l'ombre (36).
